# EUROPEAN PATENT APPLICATION

(11) **EP 2 268 006 A2**
(43) Date of publication of application: **29.12.2010**
(21) Application number: 10166159.3
(22) Date of filing: 16.06.2010
(51) Int. Cl.: H04N 5/445

(54) **Display apparatus and method for displaying**

(30) Priority: 17.06.2009 KR 20090053761
(71) Applicant: Samsung Electronics Co., Ltd., Suwon-si, Gyeonggi-do 442-742 (KR)
(72) Inventor: Lee, Sang-soo, Seoul (KR); Kim, Jae-hyon, Gyeonggi-do (KR); Kim, Won-il, Gyeonggi-do (KR)
(74) Representative: Robinson, Ian Michael

(57) **Abstract**

Provided is a display apparatus and method for displaying. The display apparatus includes: a control unit which controls a display unit to display a first graphic representing the display apparatus, a second graphic representing an external device, and a third graphic representing a connection status between the display apparatus and the external device, wherein the control unit controls the display unit to change the third graphic, if one or more external device is attached to the display apparatus.

## Description

### CROSS-REFERENCE TO RELATED APPLICATIONS

This application claims priority from Korean Patent Application No. 10-2009-0053761, filed on June 17, 2009, in the Korean Intellectual Property Office, the disclosure of which is incorporated herein by reference in its entirety.

### BACKGROUND OF THE INVENTION

### 1. Field of the Invention

Apparatuses and methods consistent with exemplary embodiments relate to displaying, and more particularly, to displaying a connection status between a display apparatus and an external device attached thereto.

### 2. Description of the Related Art

The development of electronic technologies has enabled a variety of electronic apparatuses, including display apparatuses such as a TV, to be connected and used in interaction with each other.

For example, audio/visual (A/V) devices such as video cassette recorders (VCR), Blue-ray disk players (BDP) or DVD players are provided with a variety of interfaces, such as Ethernet, multimedia over Coax Alliance (MoCA), or HDMI. However, as the number of interfaces increases, users have an increasing difficulty to figure out how to connect a new AV device to the display apparatus.

While it is possible for the users to successfully connect the display apparatus and the AV devices if they know the interfaces for their AV devices, or through the use of an integrated interface if provided, the users may still experience inconvenience since the users have no way to instantly check if the devices are connected or not.

### SUMMARY OF THE INVENTION

According to the present invention there is provided an apparatus and method as set forth in the appended claims. Other features of the invention will be apparent from the dependent claims, and the description which follows.

One or more exemplary embodiment provides a display apparatus which displays a connection status between the display apparatus and an external device connectible thereto, and a method of displaying thereof.

According to an exemplary embodiment, there is provided a method a display apparatus, including: a control unit which controls a display unit to display a first graphic representing the display apparatus, a second graphic representing an external device, and a third graphic representing a connection status between the display apparatus and the external device, and wherein the control unit controls the display unit to change the third graphic, if one or more external device is attached to the display apparatus.

The display unit may display a message which indicates the connection status between the display apparatus and the external device.

The display unit may display a message representing a name and a model name of the external device.

The display unit may display a message indicating a name and a model name of the display apparatus.

The control unit may control the display unit to display the third graphic as a dotted line connecting the first and second graphics, thereby indicating that connection between the display apparatus and the external device is being attempted, along with a message, near the third graphic, which explicitly indicates the attempt, if the external device is attached to the display apparatus.

The display apparatus may additionally include a determining unit which determines whether or not the display apparatus is capable of displaying data transferred from the external device.

The control unit may control the display unit to display the third graphic as a solid line connecting the first and second graphics, thereby indicating that connection between the display apparatus and the external device is complete, along with a message, near the third graphic, which explicitly indicates completion of the connection near the third graphic, if it is determined that the display apparatus is capable of displaying the data transferred from the external device.

The control unit may control the display unit to display a predetermined image form, overlapping one of the second graphic or the third graphic, which indicates no connection between the display apparatus and the external device or , if it is determined that the display apparatus is not capable of displaying the data transferred from the external device.

The control unit may control the display unit to display at least one of a product type and a model name of the external device, if it is determined that the display apparatus is capable of displaying the data transferred from the external device.

The third graphic may include a first port graphic representing a connection port of the display apparatus, and a second port graphic representing a connection port of the external device, and the control unit may control the display unit to alter the second port graphic if the external device is not completely attached to the display apparatus.

The display apparatus additionally include an input unit to receive at least one of a product type and a model name of the external device, in which the control unit may control the display unit to display at least one of the product type and the model name of the external device input through the input unit, if the external device is connected to the display apparatus through an external connecting terminal.

If one or more external device is connected to the display apparatus and executed, the control unit may control the display unit to display the second graphic corresponding to the executed external device as highlighted.

According to an aspect of another exemplary embodiment, there is provided a display method of a display apparatus, which includes:
determining, by a determining unit, whether or not the display apparatus is capable of displaying data transferred from an external device, if one or more external device is attached to the display apparatus, and controlling, by a control unit, a display unit to display the display apparatus, the external device, and a connection status between the display apparatus and the external device, according to the result of the determining operation.

The displaying may include displaying at least one of: a first graphic representing the display apparatus; a second graphic representing the external device; and a third graphic representing the connection status between the display apparatus and the external device.

If the external device is attached to the display apparatus, the display method may additionally include displaying the third graphic as a dotted line connecting the first and second graphics, thereby indicating that connection between the display apparatus and the external device is being attempted, along with a message, near the third graphic, which explicitly indicates the attempt.

If it is determined that the display apparatus is capable of displaying the data transferred from the external device, the displaying may include displaying the third graphic as a solid line connecting the first graphic and the second graphic, thereby indicating connection between the display apparatus and the external device is complete, along with a message, near the third graphic, which explicitly indicates the completion of connection.

If it is determined that the display apparatus is not capable of displaying the data transferred from the external device, the displaying may include displaying a predetermined image form, overlapping one of the second graphic or the third graphic, which indicates no connection between the display apparatus and the external device.

If it is determined that the display apparatus is capable of displaying the data transferred from the external device, the displaying may include displaying at least one of a product type and a model name of the external device.

The third graphic may include a first port graphic representing a connection port of the display apparatus, and a second port graphic representing a connection port of the external device, and if it is determined that the display apparatus is not capable of displaying the data transferred from the external device because the external device is not completely attached to the display apparatus, the displaying may include altering the second port graphic.

The display method additionally include inputting at least one of a product type and a model name of the external device, wherein the displaying comprises displaying at least one of the input product type and model name of the external device, if the external device is connected to the display apparatus through an external connecting terminal.

If one or more external device is connected to the display apparatus and executed, the display method may additionally include displaying the second graphic corresponding to the executed external device as highlighted.

The display method may additionally include inputting a signal to select the second graphic, and if the second graphic is selected, transferring a control signal to execute the external device corresponding to the second graphic to the external device.

### BRIEF DESCRIPTION OF THE DRAWINGS

The above and/or other aspects of exemplary embodiments will be more apparent by describing certain exemplary embodiments with reference to the accompanying drawings, in which:

FIG. 1 is a view illustrating a display apparatus according to an exemplary embodiment;

FIG. 2 is a view illustrating more detail of the display apparatus of FIG. 1;

FIGS. 3 to 8 are views illustrating exemplary embodiments of a display unit;

FIG. 9 is a flowchart illustrating a display method of a display apparatus according to an exemplary embodiment; and

FIG. 10 is a flowchart illustrating more detail of the display method of FIG. 9.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Accordingly, it is apparent that the exemplary embodiments can be carried out without those specifically defined matters. Also, well-known functions or constructions are not described in detail since they would obscure the invention with unnecessary detail.

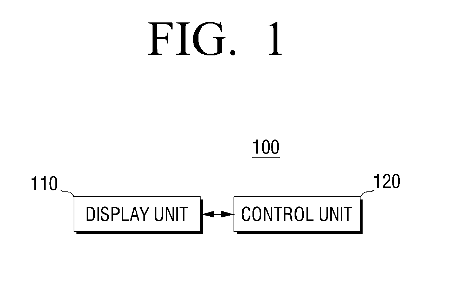

FIG. 1 is a view illustrating a display apparatus 100 according to an exemplary embodiment.

Referring to FIG. 1, the display apparatus 100 may include a display unit 110, and a control unit 120.

The display unit 110 may display a first graphic representing the display apparatus 100, a second graphic representing an external device, and a third graphic representing a connection status between the display apparatus 100 and an external device 200. The term 'connection status' herein may refer to a variety of connection relationships including, 'connecting', 'connected', 'connection disabled', or 'connection incomplete'.

The display unit 110 may display a message to explicitly indicate the connection status between the display apparatus 100 and the external device. The display unit 110 may also display a name and a model name of the external device 200. Additionally, the display unit 10 may display a message indicating a name and a model name of the display device 100. According to an exemplary embodiment, both the name and the model name of one of either the display apparatus or the external device may be displayed, or alternatively, either the name or the model name of the display apparatus or the external device may be displayed.

The display unit 110 may activate a popup window or on-screen display (OSD) automatically, upon attachment of the external device to the display apparatus. Alternatively, the display unit 110 may activate the popup window or OSD in accordance with the user selection.

The control unit 120 may control the display unit 110 to change the third graphic, if at least one external device 200 is attached to the display apparatus 100.

Accordingly, since the connection status between the external device 200 and the display apparatus 100 is clearly displayed for the user to check, the user convenience increases.

In an exemplary embodiment, the display apparatus 100 is a television (TV), but is not limited thereto. For example, the display apparatus 100 may be a computer monitor. An exemplary embodiment of the external device 200 may be an AV device, but is also not limited strictly thereto. Accordingly, the external device 200 may be implemented as any device that can be connected to and operated in association with the display apparatus 100. Additionally, the first to third graphics may include an image containing a picture or a shape, and a message containing textual information. Additionally, the graphic or message may be a dynamic image.

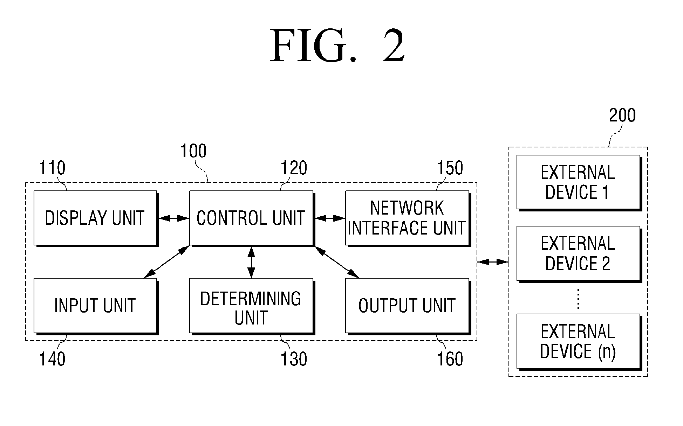

FIG. 2 is a view illustrating the display apparatus of FIG. 1 in more detail.

Referring to FIG. 2, the display apparatus 100 may be connected to an external device 200. The display apparatus 100 may include the display unit 110 and the control unit 120 as explained above, and additionally include a determining unit 130, an input unit 140, a network interface unit 150, and an output unit 160.

The determining unit 130 determines whether or not the display apparatus 100 can display the data transferred from the external device 200. Generally, if at least one external device 200 is attached to the display apparatus 100, the determining unit 130 may determine whether or not the display apparatus 100 can display the data transferred from the external device 200, by exchanging a verification key value according to a preset verification protocol between the display apparatus 100 and the external device 200. The determining unit 130 may operate automatically, upon attachment of at least one external device 200 to the display apparatus 100, and if the determining unit 130 determines that the display apparatus 100 can display the data transferred from the external device 200, information of the external device 200, including the product type and the model name, may be transferred to the display apparatus 100. At this time, the control unit 120 may control the display unit 110 to automatically display at least one of the product type and the model name of the external device 200.

The input unit 140 may receive at least one of the product type and the model name of the external device 200. Specifically, the input unit 140 may be implemented as a remote controller of a TV, or a mouse of a PC.

The network interface unit 150 may be implemented as a port, a terminal, or a connector, and may include a plurality of interfaces or one integrated interface.

The output unit 160 may be implemented as a speaker, and operate to output graphics or messages from the display unit 110 in a sound form.

The display apparatus 100 may additionally include a storage unit (not illustrated) to store in advance a product type, a model name, or a verification protocol of an external device 200 which is may be implemented in association with the display apparatus.

Meanwhile, the external device 200 may include one or more devices (1 ∼ n), and be connected to the display apparatus 100 via the network interface unit 150 of the display apparatus 100. Additionally, the external device 200 may also have a network interface (not illustrated).

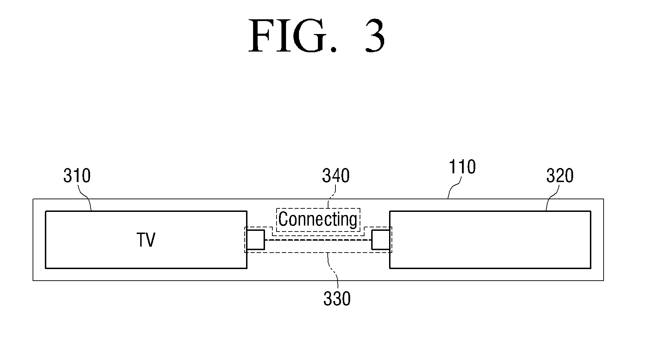

FIGS. 3 to 8 are views illustrating various examples of the display unit according to exemplary embodiments.

Referring to FIG. 3, the display unit 110 may display a connection status, and include a first graphic 310 representing the display apparatus 100, a second graphic 320 representing the external device 120, and a third graphic 330 representing a connection status between the first and second graphics. If the external device 120 is attached to the display apparatus 100, the control unit 120 controls the display unit 110 to display a dotted line to indicate that the third graphic 330 is attempting to connect the first and second graphics 310, 320, and also display a message 340 indicating 'connecting' near the third graphic 330. Alternatively, the control unit 120 may control the display unit 110 to display only the graphic to represent the current attempt for connection, while skipping a message that explicitly indicates such attempt. The determining unit 130 may determine whether the display apparatus 100 can display the data transferred from the external device 200 or not, concurrently while the display unit 110 carries out the displaying operation.

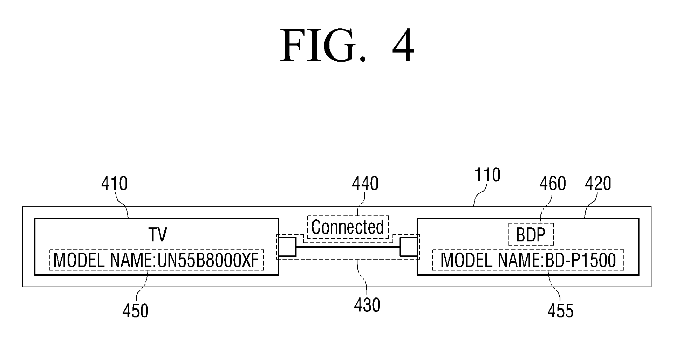

Referring to FIG. 4, the display unit 110 may display a 'connected' connection status to indicate that the connection is successfully made. If it is determined from the verification process at the determining unit 130 that the display apparatus 100 can display the data transferred from the external device 200, the control unit 120 may control the display unit 110 to display a solid line to indicate that the third graphic 430 completes connecting the first and second graphics 410, 420, along with a message 440 'Connected' near the third graphic 430. Alternatively, the control unit 120 may control the display unit 110 to display only the graphic representing the current connected connection status, while skipping the message which literally indicates such status. Additionally, since the information exchange between the display apparatus 100 and the external device 200 is carried out at the determining unit 130, the control unit 120 may control the display unit 110 to display a product type 460 of the external device 120, a model name 450 of the display apparatus 110, and a model name 455 of the external device 200.

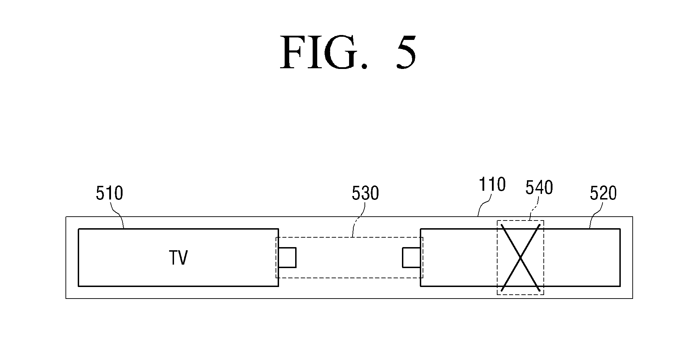

Referring to FIG. 5, the display unit 110 may display a 'connection disabled' connection status. If it is determined through the verification process at the determining unit 130 that the display apparatus 100 cannot display the data transferred from the external device 200, the control unit 120 may control the display unit 110 to display a predetermined form of image 540 in the second graphic 520, while skipping the third graphic 530. Alternatively, the control unit 120 may control the display unit 110 so that neither the predetermined form of image 540, nor the third graphic 530 is displayed. Alternatively, the control unit 120 may control the display unit 110 to display either a dotted line or a solid line around the third graphic 530, and a predetermined image form 540, for example, a mark 'X', which overlaps the third graphic 530.

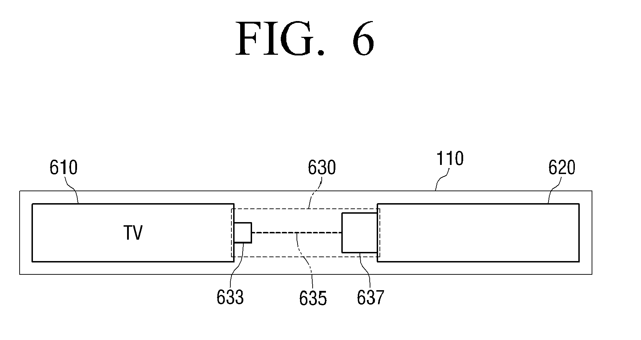

Referring to FIG. 6, the display unit 120 may display a 'connection incomplete' connection status. The term 'connection incomplete' herein may refer to a condition in which a network interface unit 150 of the display apparatus 100 is not completely attached to a network interface unit (not illustrated) of the external device 200, and it is thus impossible to transmit a signal through a specific pin of each network interface. As shown in FIG. 6, the third graphic 630 may be connected to the first graphic 610, and include a first port graphic 633 representing the network interface unit 150 of the display apparatus 100, a connection line graphic 635, and a second port graphic 637 representing a network interface unit (not illustrated) of the external device. Accordingly, the control unit 120 may control the display unit 110 to enlarge, or flash on and off, the second port graphic 637, if the external device 200 is not completely attached to the display apparatus 100.

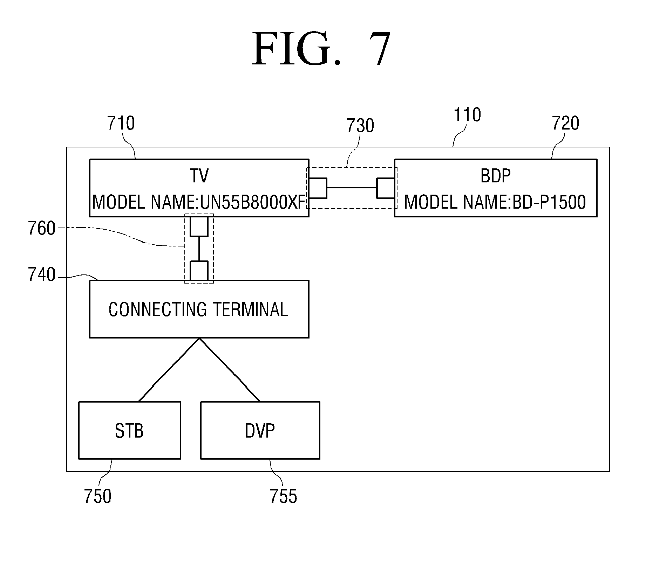

Referring to FIG. 7, one or more external device 200 may be connected to the display apparatus 100, and the display unit 110 may display a situation, for example, where the external device 200 is connected to the display apparatus 100 through a connecting terminal (not illustrated). As shown in FIG. 7, while the external device 200 corresponding to the second graphic 720 may be implemented in association with the display apparatus 100, the external device 200 corresponding to the second graphic 750, 755 may not be implemented. In this case, the external device 200 corresponding to the second graphic 750, 755 is connectable to the display apparatus 100 through the connecting terminal 740. The connecting terminal 740 may be implemented as a gender.

If the external device 200 is connected to the display apparatus 100 through the external connecting terminal 740, the control unit 120 may control the display unit 110 to display the second graphic 750, 755 representing the external device 200 connected to the external connecting terminal 740, along with at least one of a product type and a model name of the external device 200 which is input through the input unit 140. At this time, the third graphic 760 between the external connecting terminal 740 and the display apparatus 100 may represent a variety of connection statuses such as 'connecting', 'connected', or the like.

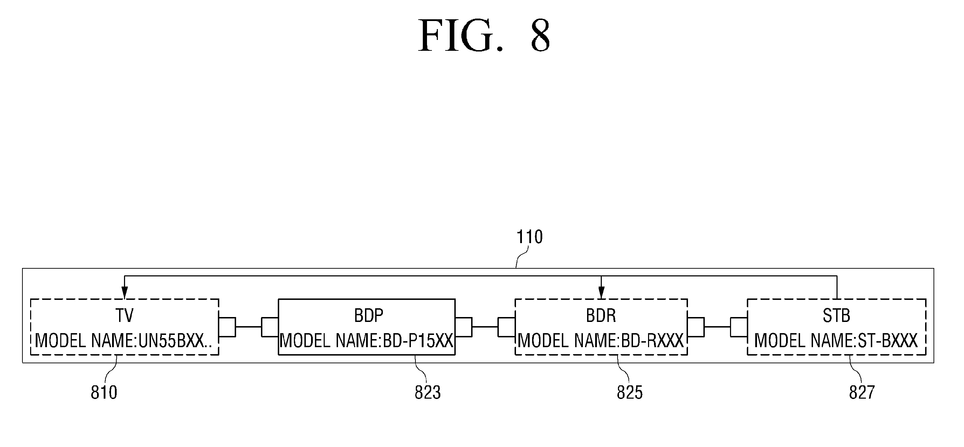

Referring to FIG. 8, after displaying the connection status as explained above, the display unit 110 may display the operational status of the external device 200. Of course, the external device 200 has to be successfully connected to the display apparatus 100 in order for the display unit 110 to display the operational status of the external device 200. Specifically, if one or more external device 200 is connected to the display apparatus 100 and executed, the control unit 120 may control the display unit 110 to display the second graphic 825, 827 corresponding to the executed external device 200 in highlighting. Alternatively, if one or more external device 200 is connected to the display apparatus 100 and executed, the control unit 120 may control the display unit 110 to display only the first and second graphics as highlighted, or alternatively, display from first to third graphics as highlighted.

Along with the various display patterns of FIGS. 3 to 8 provided by the display unit 110, the output unit 160 may notify the connection status or operational status of the external device 200 in the sound form. Meanwhile, the display apparatus 100 according to an exemplary embodiment may be implemented in a separate interface device which connects the external device to the display apparatus and which has a display screen.

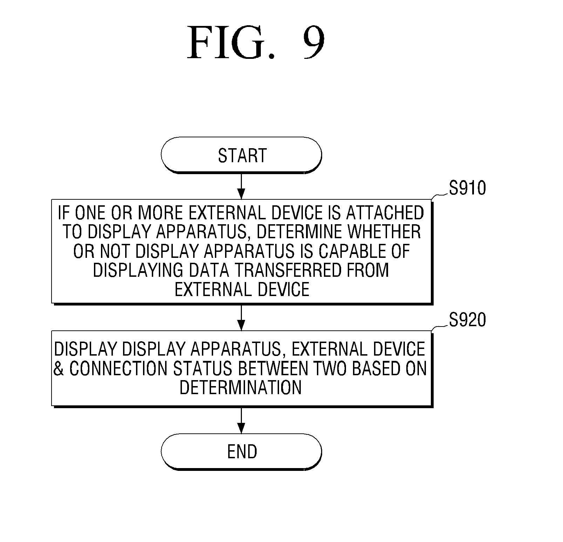

FIG. 9 is a flowchart illustrating a display method of a display apparatus according to an exemplary embodiment.

Referring to FIG. 9, at S910, if one or more external device 200 is attached to the display apparatus 100, it is determined whether the display apparatus 100 is capable of displaying the data transferred from the external device 200 or not. At S920, based on the determination at S910, the display apparatus 100, the external device 200, and a connection status between the display apparatus 100 and the external device 200, are displayed.

Specifically, at S920, it is possible that at least one of the first graphic representing the display apparatus 100, the second graphic representing the external device 200, and the third graphic representing the connection status between the display apparatus 100 and the external device 200, is displayed. Alternatively, the connection status between the display apparatus 100 and the external device 200, or a message indicating a name or and a model name of the display apparatus 100 and the external device, may be displayed.

According to an exemplary embodiment, if the external device 200 is attached to the display apparatus 100, the third graphic may be displayed in a dotted line to indicate that the third graphic is attempting to connect the first and second graphics, along with a message which literally indicates such attempt near the third graphic. The abovementioned displaying of the third graphic may be carried out during or after the determining operation at S910.

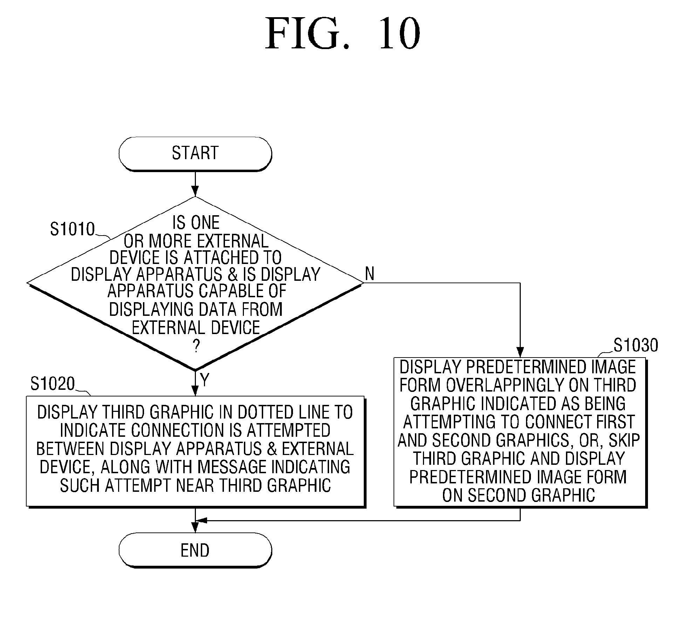

FIG. 10 is a flowchart illustrating in more detail the display method of FIG. 9.

Referring to FIG. 10, at S1010, if one or more external device 200 is attached to the display apparatus 100, it is determined whether the display apparatus 100 is capable of displaying the data transferred from the external device 200 or not. At S1010-Y, if it is determined that the display apparatus 100 is capable of displaying the data transferred from the external device 200, at S1020, the third graphic is displayed in a solid line, indicating that the third graphic completes connecting the first and second graphics, along with a message which explicitly indicates such completion of connection near the third graphic.

Meanwhile, at S1010-N, if it is determined that the display apparatus 100 is not capable of displaying the data transferred from the external device 200, at S1030, a predetermined image form may overlap the third graphic which is indicated as being attempting to connect the first and second graphics, or alternatively, the predetermined image form may be displayed alone, while the third graphic is not displayed. At S1010-N, if the display apparatus 100 is not capable of displaying the data transferred from the external device 200 due to incomplete fitting between the external device 200 and the display apparatus 100, the second port graphic may be enlarged or flashed on and off.

Additionally, the display method according to an exemplary embodiment may additionally include the operation of receiving an input of at least one of a product type and a model name of the external device 200. In this case, if the external device 200 is connected to the display apparatus 100 through the external connecting terminal 740, the third graphic representing the external device 200 connected to the external connecting terminal 740 may be displayed, along with at least one of the input product type and the model name of the external device 200.

Furthermore, if one or more external device 200 is connected to the display apparatus 100 and executed, the second graphic corresponding to the executed external device 200 may be as highlighted. Alternatively, only the first and second graphics, or only the second and third graphics may be displayed as highlighted. Alternatively, from the first to third graphics may be displayed as highlighted. According to an exemplary embodiment, if the second graphic is selected in response to an input of a signal to select the second graphic, a control signal to execute an external device corresponding to the selected second graphic may be transferred to the external device.

The foregoing exemplary embodiments and advantages are merely exemplary and are not to be construed as limiting in any form. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus, comprising:
a display unit which displays a first graphic representing the display apparatus, a second graphic representing an external device, and a third graphic representing a connection status between the display apparatus and the external device;
a determining unit which determines whether or not the display apparatus is capable of displaying data transferred from the external device; and
a control unit which controls the display unit to change the third graphic, if one or more external device is attached to the display apparatus.

2. The display apparatus of claim 1, wherein the display unit displays a message to indicate the connection status between the display apparatus and the external device, a message representing a name and a model name of the external device, and a message indicating a name and a model name of the display apparatus.

3. The display apparatus of claim 1, wherein the control unit controls the display unit to display the third graphic as a dotted line connecting the first and second graphics, thereby indicating connection between the display apparatus and the external device is being attempted , along with a message, near the third graphic, which literally indicates the attempt, if the external device is attached to the display apparatus.

4. The display apparatus of claim 1, wherein the control unit controls the display unit to display the third graphic as a solid line connecting the first and second graphics, thereby indicating connection between the display apparatus and the external device is complete, along with a message, near the third graphic, which literally indicates the completion of the connection, if it is determined that the display apparatus is capable of displaying the data transferred from the external device.

5. The display apparatus of claim 1, wherein the control unit controls the display unit to display at least one of a product type and a model name of the external device, if it is determined that the display apparatus is capable of displaying the data transferred from the external device.

6. The display apparatus of claim 1, wherein the third graphic comprises a first port graphic representing a connection port of the display apparatus, and a second port graphic representing a connection port of the external device, and
the control unit controls the display unit to enlarge or flash on and off the second port graphic, if the external device is not fittingly attached to the display apparatus.

7. The display apparatus of claim 1, further comprising an input unit to receive at least one of a product type and a model name of the external device, and wherein the control unit controls the display unit to display at least one of the product type and the model name of the external device input through the input unit, if the external device is connected to the display apparatus through an external connecting terminal.

8. A display method of a display apparatus, the display method comprising:
determining whether or not the display apparatus is capable of displaying data transferred from an external device, if one or more external device is attached to the display apparatus; and
displaying the display apparatus, the external device, and a connection status between the display apparatus and the external device, according to the result of the determining.

9. The display method of claim 8, wherein the displaying comprises displaying at least one of: a first graphic representing the display apparatus; a second graphic representing the external device; and a third graphic representing the connection status between the display apparatus and the external device.

10. The display method of claim 9, if the external device is attached to the display apparatus, further comprising displaying the third graphic as a dotted line connecting the first and second graphics, thereby indicating that connection between the display apparatus and the external device is being attempted, along with a message, near the third graphic, which literally indicates the attempt.

11. The display method of claim 9, wherein, if it is determined that the display apparatus is capable of displaying the data transferred from the external device, the displaying comprises displaying the third graphic as a solid line connecting the first graphic and the second graphic, thereby indicating connection between the display apparatus and the external device is complete, along with a message, near the third graphic, which literally indicates the completion of connection.

12. The display method of claim 9, wherein, if it is determined that the display apparatus is not capable of displaying the data transferred from the external device, the displaying comprises displaying a predetermined image form, overlapping one of the second graphic or the third graphic, which indicates no connection between the display apparatus and the external device.

13. The display method of claim 9, wherein, if it is determined that the display apparatus is capable of displaying the data transferred from the external device, the displaying comprises displaying at least one of a product type and a model name of the external device.

14. The display method of claim 9, further comprising inputting at least one of a product type and a model name of the external device, wherein the displaying comprises displaying at least one of the input product type and model name of the external device, if the external device is connected to the display apparatus through an external connecting terminal.

15. The display method of claim 9, if one or more external device is connected to the display apparatus and executed, further comprising displaying the second graphic corresponding to the executed external device as highlighted.
